# EUROPEAN PATENT APPLICATION

(11) **EP 1 168 816 A1**
(43) Date of publication of application: **02.01.2002**
(21) Application number: 00113037.6
(22) Date of filing: 21.06.2000
(51) Int. Cl.: H04N 1/32

(54) **Photographic laboratory image sequencing apparatus**

(71) Applicant: SYSTEL INTERNATIONAL S.p.A., 30030 Martellago (VE) (IT)
(72) Inventor: Beggiao, Vanni, 35100 Padova (IT)
(74) Representative: Schwabe - Sandmair - Marx

(57) **Abstract**

A photographic laboratory digital image sequencing apparatus (100) for generating a sequence of digital images of a customer order before passing the digital images to a printer for printing, comprising an image input (110), through which the digital images are received, an image output (130) which outputs the digital images, an image memory (120) for storing the digital images of the customer order, a determining unit (150) which determines positions of the stored digital images in an output sequence by referring to reference data (101, 102, 103), said image output outputting the digital images of the customer order from the memory according to the output sequence.

## Description

The present invention relates to an apparatus for sequencing digital images to be printed in a photographic laboratory according to the preamble of the claim 1. The present invention further relates to a processing system for processing photographs in a photographic laboratory comprising the apparatus, a method for sequencing photographic digital images in a photographic laboratory, a program which performs the method and a computer program product comprising the program.

Conventionally, a photographer photographs pictures (images) by means of a camera. In this way he captures image information and stores the image information on a suitable storing medium, e.g. on a film in conventional cameras or on a digital memory device (e.g. floppy disk) in digital cameras. The photographer then brings the storage medium (e.g. film) to a photo shop (peripheral organization). At a photo shop the storing mediums (e.g. films in film cartridges, electronic memory units of digital cameras, etc.) of several customers are collected and processing information are added concerning the particular processing wishes of the customer (e.g. the format of the photographic prints, number of prints per picture (image), arrangement of the prints in the wallet, e.g. sorted per format or chronologically). Furthermore, the name of the customer is noted and usually an individual order number is assigned to a so-called order or customer order which comprises, for example, a work envelope with an inserted film cartridge and the working instructions or processing information. Moreover the photo shop may add particular requests to the processing information, e.g. the request how the prints are to be sorted in a wallet. In this way, a plurality of "customer orders" are collected at the photo shop.

Each photo shop forwards the customer orders to a photographic laboratory (centralized organization). At this photographic laboratory, each order is processed by processing the customer order (e.g. film) according to the corresponding processing information (e.g. notes, bar codes, etc.) of the order.

The photo shop may forward the customer orders together with the corresponding processing information physically by means of work envelopes or digitally e.g. via internet. If the customer orders are received physically, the films included in the customer orders are scanned by a scanner in order to obtain digital images. If the customer orders are received digitally, e.g. via a data transmission line or via a data storage medium (e.g. CD, memory stick etc.), the images are already in digital form.

The digital images of a customer order are ordered according to a predetermined sequence which usually corresponds to the chronology of the picture making of the photographer. This applies for both cases, the processing of scanned image data and the processing of image data already received in digital form.

Following this predetermined sequence, the image data are fed to a printer which prints one image after the other. If the processing information of a customer order indicates that a print of a certain image is requested several times, the several prints (copies) of this image are printed one after the other. Thereafter the next image of the predetermined sequence is printed and so on.

The printer usually prints the images on a web of photographic paper which has then to be cut by a print cutter to produce single prints.

In a conventional photographic laboratory, a print sorter is arranged after the print cutter and receives the cut prints in order to selectably guide them into different buffer paths. The path of the sorter lead to a plurality of bins in a print buffer arranged one above the other. Each bin is assigned to a particular format of the print. After all prints of a customer order are collected in the print buffer, the prints sorted in the different bins are released and fall onto a stack table, where they constitute a stack of photographic prints which are sorted according to an order determined by the arrangement of the prints in the bins. This stack of prints is then inserted into a wallet.

The afore-mentioned arrangement of print cutter, print sorter and print buffer allows to sort the prints in a final stack according to a certain sequence. Since the number of bins in a sorter is typically smaller than the number of prints to be sorted, there is only a limited number of different sorting alternatives. Typically the customer or the retail shop wants to have the prints sorted in a way which differs from the original (chronologically) sequence. For instance, in the case of APS films, the customer wants to have the prints arranged according to format. The APS formats are H (HDTV), C (classic) and P (panoramic). The corresponding print size is 4 x 7 (H), 4 x 6 (C) and 4 x 12 (P). Usually the final stack with the prints (complete print pack) is composed of a P pack, H pack and C pack. These three print packs are usually stacked together such that the C pack is on the top. Also in the case of conventional 35mm films (135), films with interspersed panoramic pictures are produced which have to be sorted. In order to solve this task, the finishing station comprising the cutter, sorter and buffer requires at least three bins. If the index print which shows thumb nail images of the customer order is to be set on top of the stack, an additional bin has to be provided.

The sorting task of the finishing system increases if the customer wants to have two or more copies of each print. In this case the customer usually wants two or more complete print packs, each complete print pack comprising the same (and all) pictures. This allows the customer to easily give one complete print pack to one person (e.g. a friend). In order to solve this problem a huge number of additional bins are necessary in a sorter. Alternatively a second sorter may be arranged before the final sorter, and having at least as much bins as copies of the same prints are requested, in order to collect prints of one packet in one bin before the final sorting according to format is performed by the final sorter.

The object of the invention is, to provide an apparatus, a method, a processing system, a program, and a program product which allows to simplify the finishing system in a photographic laboratory, while a multiplicity of different sequences of prints are possible.

The object is solved by the subject matter of the claims 1, 5, 7, 8, and 9. The dependent claims are directed to embodiments of advantage.

The apparatus of the present invention arranges digitally digital images which he has received. Typically the digital images may be assigned to a customer order which corresponds to a certain number of different images. Then the apparatus transfers the images arranged according to a selectable sequence to the printer. Preferably the rearranging or sequencing of the digital images is performed for digital images of one customer order which are usually received according to a predetermined sequence (input sequence). In order to be able to sequence the digital image such that the sequence (output sequence) is optimal for the finishing, i.e. sorting and stacking of the prints, the apparatus of the present invention comprises preferably an image memory, which allows to store a plurality of digital images. Preferably the image memory has a capacity to store all images of one customer order (e.g. 20 to 50 images). Furthermore a determining unit is provided. This determining unit advantageously determines the output sequence, according to which the digital images of a customer order are to be output to the printer. For this purpose, the determining unit determines the positions of the digital images of the customer order in the output sequence. The determination of the positions is performed by referring to reference data.

The reference data are preferably stored in a memory in the sequencing apparatus but may also be input e.g. via an interface or data storage medium drive (e.g. disk drive, CD-drive). The reference data are data which are relevant for the sequencing process or rearranging process. The reference data may relate positions in a predetermined, received sequence to positions in an output sequence and/or may give information on preferred positions of received images in the output sequence. The reference data may correspond to or be based on the processing information of the customer order assigned to the digital images, which are to be sequenced or rearranged in the output sequence. Thus the reference data preferably include information about the format of the print of each digital image of the customer order and include information about the number of times, each digital image has to be printed. Furthermore, the reference data may represent the rules according to which the sequencing has to be performed, for instance, the rule that digital images, which belong to one and the same format, should be arranged next to each other, for instance, the rule that digital images assigned to the C format should be output at the beginning of the output sequence, and for instance, the rule that, in the case each image has to be printed several times several sets of digital images should be arranged in the output sequence one after the other while each set includes all digital images of the customer order, thus complete print packs may be achieved. These rules, which may be stored in the apparatus, are preferably changeable, e.g. by means of an operator interface (e.g. screen and keyboard), which allows to set the rules e.g. depending on the sorting capabilities of the finishing apparatus or particular customer wishes.

If, for example, the finishing system is able to sort the prints according to format but is not able to provide double packs with two complete print packs or triple packs with three complete print packs, each pack having a complete set of digital images of one customer order, the sorting according to format has not to be performed by the sequencing apparatus of the present invention. In this case, the operator may amend the reference data such that the rules are changed such that the sequencing apparatus does not perform a sorting (sequencing) according to format but only according to sets such that two or three complete sets of digital images are arrange one after the other in the output sequence.

Sometimes the process information indicates that the customer does not want the predetermined (e.g. chronological) sequence to be altered. In this case, the reference data indicate based on the process information that the determining unit has to determine the position of the digital images according to the sequence in which the digital images has been received by the sequencing apparatus.

The image output of the sequencing apparatus of the present invention outputs the digital images according to the output sequence determined by the determining unit. For this purpose the image output preferably accesses the memory and selects one digital image after the other in the output sequence according to its designated position defined by the reference data. For this purpose the image output preferably comprises a (digital) buffer which allows to store one digital image which is output while the next one is selected according to the output sequence.

If the received image data are received together with the assigned processing information, if, for instance, the processing information is placed in a header of a data stream assigned to a customer order, the sequencing apparatus of the present invention preferably comprises a separation unit which allows to separate the processing information from the data stream and which allows to feed this processing information as reference data to the determining unit.

Preferably the rearranging of the digital images is not performed by restoring the digital images on different places in the memory until the physical sequence in the memory corresponds to the output sequence, but preferably the addressing of the digital images having a fixed location in the memory is rearranged instead. For instance, pointer technology may be used to access the digital images. For instance, a sequence of pointers may correspond to the (intended) output sequence. In this case, each pointer of the sequence is directed to the memory of a particular digital image such that the pointer sequence corresponds to the output sequence which has to be achieved according to the reference data.

Preferably the sequencing apparatus has a user interface, such as a screen, keyboard, mouth, microphone, speaker etc., which allows the user to input information into the sequencing apparatus and which may also allow the sequencing apparatus to prompt the user to input information. For instance, the user may be prompted by a menu to input information about the sorting capabilities of the finishing system (cutter, sorter, buffer). For instance, the finishing system may have a fixed sorting regime which may not be changed by an operator. In this case, the sequencing apparatus of the present invention has to consider the kind of sorting of the finishing system. If, for example, the finishing system is adopted for the production of a double pack, i.e. two copies of a set of prints, the finishing system alternately sorts the incoming prints in two bins but does not perform a sorting according to format. This kind of sorting information about the finishing system is input into the sequencing apparatus of the present invention as reference data. Since the sorting of the two copies in two different bins is already performed by the finishing system, the determining unit of the sequencing apparatus determines that two identical digital image are placed next to each other in the output sequence and are not placed in two different sets. Thus there is always a pair of digital images in the output sequence. However, these pairs of digital images may be, for instance, arranged in the output sequence by the sequencing apparatus such that digital images with the same print format are next to each other.

If, for example, the finishing system performs sorting according to format and the customer and the retail shop would like to have such a sorting according to format, the sequencing apparatus, of course, has not to do such a sorting additionally. If, however, two copies of the same prints are to be performed, e.g. according to the processing information assigned to customer order, this processing information is input in the sequencing apparatus and used as reference data. If the set of digital images belonging to one customer order has n digital images and, for example, k copies are to be made of the digital images, the determining unit of the sequencing apparatus of the present invention defines k positions for each single digital image in the output sequence, i.e. defines in summary K x n positions. If a digital image has a position i in the first set of digital images to be output, the same digital image is positioned at a position i+n, i+2n, and so on in the output sequence, until k identical digital images are positioned in the output sequence.

In the following an embodiment of the invention will be described by referring to the accompanied figure.

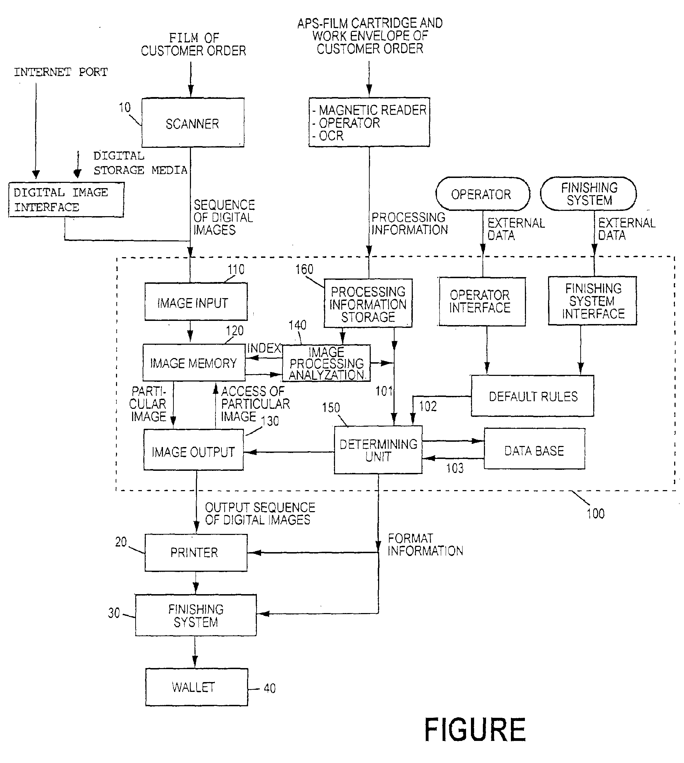

The figure shows a diagrammatically structure of the sequencing apparatus of the present invention as well as of the processing system. Furthermore, the figure illustrates the different steps to be performed according to the method or the program of the present invention.

The photographic laboratory receives a film in a work envelope and separates the film from the work envelope. This film is assigned to a customer order and scanned by a scanner by scanning one frame of the film after the other. The sequence of the frames on the film determines the sequence of digital images output by the scanner 10 and input in the sequencing apparatus 100. Alternatively to the scanner 10 a digital image interface may be provided which may receive digital images (and processing information) via a data transmission line (e.g. internet port) or via a storage medium (e.g. CD, disc, data tape).

The film of the customer order is typically accompanied by processing information (notes) which can be found on the work envelope. This notes describe the wishes of the customer or the retail shop concerning the processing of the film, in particular concerning the format of each print to be made and the number of copies to be made of one image. The notes may be automatically, digitally processed by means of optical character recognition (OCR) or may be read by an operator and input in the system via keyboard and screen. Furthermore, in the case of APS film, the magnetic information on the film cartridge is detected and analyzed. The magnetic information indicates for each picture whether the photographer wants the print in P, H or C format and also represents processing information. Preferably the digitalized processing information is input into a processing information storage 160.

The sequence of digital images is received by the image input 110 and passed from the image input 110 to the image memory 120.

The image output 130 accesses the image memory and selects a particular image of the stored digital images from the image memory 120 according to instructions from the determining unit 150. This particular image is output to the printer 20. The printer 20 prints the image e.g. by means of a conventional exposing system on a photographic paper web. The photographic paper web is cut in the finishing system 30. According to a preferred embodiment, the finishing system has no sorter and a buffer with only one bin in order to keep the costs for the finishing system low. The prints are simply stacked in the bin according to their arriving sequence and then put into a wallet 40. Since the sequencing apparatus provides printer with the correct output sequence of digital images, the finishing system may be kept simple. For instance, only a cutter and a bin for stacking the prints is needed. A complex sorting system with several sorting path ways and buffers may be avoided.

The sequencing apparatus further comprises an image processing unit 140 which processes the images stored in the image memory 120 in order to achieve an image (index image) for the index print. This index image stored in the image memory 120 and may be positioned in the output sequence at any desired position. Usually the index image will be the last image output after a set of digital images and shows reduced images (thumb nail) of all images of the set. In this case, it is achieved that the index print is on top of the stack in the wallet.

The image processing unit may give information to the determining unit 150. For instance, the image processing unit 140 may report the number of index prints necessary to illustrate all digital images stored in the image memory of one customer order. Based on this, the determining unit may e.g. calculate the total number of images in the output sequence. Typically one or two index prints are sufficient. However, the number of index prints may increase, if, for instance, a large number of digital images stored on one data storage (e.g. CD) are input in the image input 110.

Preferably the image processing unit 140 considers the processing information of the storage 160 and controls the image memory 120 such that only the relevant information of an image is stored in order to save memory space. For instance, in the case of a panoramic format a broad band of pixels above and below a middle part of the image is not printed and may therefore be discarded. Before discarding, preferable the index images are produced based on all pixels and are stored in the image memory.

If the image memory 120 stores due to the control of the image processing unit 140 only those parts which are to be printed, the image output 130 may simply pass each digital image to the printer for printing purposes. Alternatively the image output 130 grabs only that part of a stored image which has to be printed. Another option is that the printer 20 gets information about the format from the sequencing apparatus 100, e.g. from the determining unit 150 in order to print only the requested part of the image in the desired format.

The image processing unit 140 may not only produce index prints, e.g. by subsampling the digital images, but may also analyze the images and classify them. For instance, the customer may like to have a certain number of copies of all digital images which belong to a particular class of pictures, e.g. portraits or sunsets. This wish of the customer is stored in the processing information storage 160 and may be input in the image analyzation unit 140. The image processing/analyzation unit 140 analyzes then the images in the image memory 120, e.g. by means of pattern recognition and/or by analyzing the color distribution and/or any other classification process. The information about the classification is then input in the determining unit 150. The determining unit 150 instructs the image output 130 such that the images of a particular class occur in the output sequence for the certain number of times (at particular positions).

The determining unit 150 processes different kind of information 101, 102, and 103, which all represent reference data. The determining unit 150 processes information from the image processing/analyzation unit 140 about classification of pictures, information from the processing information storage 160 about particular wishes of the customer, e.g. number of copies and format of the different digital images. The determining unit 150 may further process information about general "default rules". These general default rules define, for instance, that pictures with the C format have to be on the top of the stack, the prints with H format are below and the prints with P format are on the bottom of the stack. The general default rules may further include information about the finishing system, in particular its sorting mechanism. The general default rules may be changed by an operator via an operator interface or by data exchange with the finishing system via a finishing system interface.

Furthermore, the determining unit 150 may receive reference data 103 from an internal data base. This data base may stored profiles about the customers (photographers or retail shops). This profiles may contain default customer rules, which are to be followed if there are no particular information in the processing information of the current customer order. If, for example, the processing information does not specify where copies of particular images have to be placed in the stack of prints. For instance, copies may be placed directly next to the print with the same image or copies may be placed in an extra pack which includes only copies. In this case, the determining unit will look in the data base whether the particular customer has already requested in a previous customer order in which way he prefers to handle copies. If there is such a particular profile for the customer in the data base, this profile over rules the afore-mentioned general default rules.

The sequencing apparatus of the present invention may be implemented by means of a computer or workstation. This computer has interfaces to input the sequence of digital images, processing information, external data as well as an output interface to output the digital images according to the output sequence to the printer and may additionally have interfaces to control the printer or finishing system. A program is loaded in the computer which causes the computer to perform the processing steps performed by the above described sequencing apparatus 100. In particular the program sequences the digital images according to the reference data in a manner as described above.

## Claims

1. A photographic laboratory digital image sequencing apparatus (100) for generating a sequence of digital images of a customer order before passing the digital images to a printer for printing, comprising
an image input (110), through which the digital images are received,
an image output (130) which outputs the digital images,
**characterised by**
an image memory (120) for storing the digital images of the customer order,
a determining unit (150) which determines positions of the stored digital images in an output sequence by referring to reference data (101, 102, 103),
said image output outputting the stored digital images of the customer order according to the output sequence.

2. The sequencing apparatus of claim 1, wherein said reference data are based on or correspond to at least one of information on format of the image to be printed, information on number of prints to be made of each digital image of the customer order, stored customer profiles, or external data input in the apparatus additionally to the received digital images.

3. The sequencing apparatus of claim 1 or 2, wherein said determination unit (150) defines positions such that, in the case the customer order has n digital images and k prints are to be made of each image, each digital image of the set gets a position i, where 1 ≤ i ≤ n, and, in case k = 2, one further position j = i + n, and, in case k=3, another further positionj = i + 2*n in the output sequence.

4. The sequencing apparatus of claim 1 to 3, wherein said determination unit (150) defines positions such that digital images assigned to the same printing format are positioned next to each other in the output sequence.

5. A method for sequencing photographic digital images in a photographic laboratory for generating a sequence of digital images of a customer order before passing the digital images to a printer for printing, comprising the following steps of:
receiving digital images,
storing the digital images of a customer order in an image memory,
determining positions of digital images of the stored digital images in an output sequence by referring to reference data,
outputting the digital images of the customer order from the memory according to the output sequence.

6. The method of claim 5 comprising the step of determining the printing sequence data based on or corresponding to at least one of information on format of the images to be printed, information of number of prints for each image, or external data input in the apparatus additionally to the received images.

7. A program, which when running on a computer causes the computer to carry out the method of claims 5 or 6.

8. A computer program product comprising the program of claim 7.

9. A processing system for processing photographs in a photographic laboratory comprising
at least one of the groups consisting of a scanner (10) which produces digital images by scanning photographic films of a customer order and a digital image data interface which receives digital image data of a customer order via a data transmission line or data storage medium;
the sequencing apparatus (100) of claim 1 to 4, which receives the digital images of the customer order in the image input (110);
a printer (20) which receives and prints the digital images of the customer order output by the image output (130) of the sequencing apparatus of claim 1 to 4 in accordance with the output sequence.

10. Processing system of claim 9, further comprising a finishing device (30) having features for performing at least one of cutting or sorting, wherein the reference data (102) for the determining unit (150) refer to information on the features of the finishing device.
